# EUROPÄISCHE PATENTSCHRIFT

(11) **EP 0 589 334 B1**
(45) Veröffentlichungstag und Bekanntmachung des Hinweises auf die Patenterteilung: **06.03.1996**
(21) Anmeldenummer: 93114771.4
(22) Anmeldetag: 14.09.1993
(51) Int. Cl.: A01N 55/00

(54) **Neue konzentrierte wässrige Emulsionen von Neophanen und Azaneophanen**
Concentrated aqueous emulsions of neophanes and azaneophanes
Emulsions concentrées aqueuses de néophanes et azanéophanes

(30) Priorität: 24.09.1992 DE 4231964
(43) Veröffentlichungstag der Anmeldung: 30.03.1994
(73) Patentinhaber: Hoechst Schering AgrEvo GmbH, D-13342 Berlin (DE)
(72) Erfinder: Röchling, Hans, Dr., D-65812 Bad Soden/Ts. (DE)

(56) Entgegenhaltungen:
- EP-A- 0 443 405
- EP-A- 0 443 412

## Beschreibung

Gegenstand der vorliegenden Erfindung sind neue konzentrierte wässrige Emulsionen von Verbindungen der Formel I. 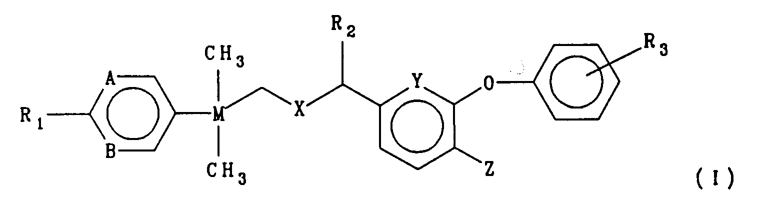
worin
- A, B =: unabhängig voneinander CH, CR₄, N,
- X =: CH₂, O, S,
- Y =: CH, N,
- Z =: H, F,
- R₁, R₄ =: unabhängig voneinander H, Halogen, (C₁-C₃)-Alkyl, (C₁-C₃)-Halogenalkyl, (C₁-C₃)-Alkoxy, (C₁-C₃)-Halogenalkoxy, (C₁-C₄)-Alkylthio, (C₁-C₄)-Halogenalkylthio oder R₁ und R₄ zusammen = -CH₂-O-CH₂-;
- R₂ =: H, (C₁-C₃)-Alkyl, Ethinyl, Vinyl, Halogen, Cyano,
- R₃ =: H, Halogen, (C₁-C₄)-Alkyl, (C₁-C₃)-Alkoxy und
- M =: C oder Si bedeuten, dadurch gekennzeichnet, daß diese niedrig ethoxylierte (C₁₂-C₁₄)-Fettalkohole mit enger Homologenverteilung enthalten in Kombination mit einem anionaktiven Emulgator und einem nichtionischen Propylenoxid-Ethylenoxid- Blockoxyalkylat.

Alkyl steht für einen geradkettigen oder verzweigten Alkylrest.

Bevorzugt bedeuten A, B = CH oder N, X = CH₂, R₁ = (C₁-C₃)-Alkoxy, R₂ = H, R₃ = H oder F und M = Si.

Insbesondere bevorzugt unter den Verbindungen der Formel I ist diejenige, bei der M = Si, R₁ = Ethoxy, A, B = CH, X = CH₂,
R₂ = H, Y = CH, Z = F und R₃ = H bedeuten (Ia).

Wirkstoffe aus der Gruppe der Neophane und Azaneophane (I) eignen sich bei guter Pflanzenverträglichkeit zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam (EP-A 0 224 024,
EP-A 0 249 015, EP-A 0 288 810). In diesen Dokumenten sind auch die üblichen Formulierungstypen für Insektizide oder Akarizide beschrieben.

Neophane und Azaneophane der Formel I besitzen neben einer breiten insektiziden Wirksamkeit eine ungewöhnlich günstige Warmblütertoxizität sowie eine sehr geringe Toxizität gegen Fische und Vögel.
Diese positiven Wirkstoffeigenschaften sollten durch eine entsprechende Formulierung unterstützt werden. Es lag zunächst nahe, die als ölige und in organischen Lösungsmitteln gut löslichen Flüssigkeiten vorliegenden Verbindungen I, als emulgierbare Konzentrate (EG) zu formulieren.

Bei der Herstellung eines emulgierbaren Konzentrates müssen jedoch Lösungsmittel verwendet werden, deren Einsatz eine Reihe von Nachteilen mit sich bringt. Konzentrierte wässrige Emulsionen hingegen, die ohne Lösungsmittel hergestellt werden können, haben folgende Vorteile gegenüber einem EC:
- hohen, bzw. keinen Flammpunkt, daher sicherer bei Transport und Lagerung;
- größere Sicherheit für den Anwender, da geringere dermale und Schleimhaut-Toxizität;
- größere Umweltfreundlichkeit, geringere bzw. keine Geruchsbelästigung.

Es bestand daher die Aufgabe, konzentrierte wässrige Emulsionen von Neophanen und Azaneophanen (I) zu entwickeln, die eine ausreichende Lagerstabilität, gute Gießfähigkeit sowie gute anwendungstechnische Eigenschaften aufweisen.

Die Herstellung von konzentrierten wässrigen Emulsionen (EW) ist prinzipiell beschrieben in DE-OS 30 09 944, DE-OS 32 35 612, EP-A 0 107 023, EP-A 0 160 182 und EP-A 0 297 207.
Die in diesen Schriften beschriebenen Verfahren sind jedoch für die hier zu formulierenden Wirkstoffe (I) nicht vorteilhaft anwendbar, da sie zu Formulierungen mit unzureichender Lagerstabilität oder zu hochviskosen Formulierungen führen.

Allgemein geeignet zur Herstellung von konzentrierten wässrigen Emulsionen sind phosphorylierte Tenside wie z. B. phosphorylierte Ethylenoxid-Propylenoxid-Blockpolymere sowie ethoxylierte und phosphorylierte styrylsubstituierte Phenole. Eine Verwendung dieser Emulgatoren auch in Kombination mit verschiedenen nicht phosphorylierten Tensiden, wie sie in DE-OS 33 46 637, DE-OS 33 04 677 und EP-A 0 257 286 beschrieben sind, führte bei den Verbindungen I nicht zum Erfolg: bei Lagertemperaturen zwischen 0°C und 25°C tritt Phasentrennung auf. Wird zur Verhinderung dieser Phasentrennung der prozentuale Anteil der Emulgatoren erhöht, so ist eine starke Erhöhung der Viskosität zu beobachten, die eine schlechte Gießfähigkeit zur Folge hat und teilweise bei Warmlagerung auch zu wachsartigen Verdickungen führt.

Bei Verwendung einer Kombination aus einem anionaktiven Emulgator, einem n-Butanol-Propylenoxid-Ethylenoxid-
Block-oxalkylat und einem Natrium-Magnesium-(und/oder Aluminium)- Schichtsilikat zur Herstellung von konzentrierten wässrigen Emulsionen von Verbindungen der Formel I erhält man Zubereitungen, die in einem breiten Temperaturbereich lagerstabil und gut gießfähig sind (Offenlegungsschrift DE 40 05 155 A1). Diese Zubereitungen haben den Nachteil, daß bei ihrer Herstellung zwei Rührgefäße erforderlich sind, da das Natrium-Magnesium-Schichtsilikat durch Auflösen in Wasser getrennt hergestellt werden muß. Diese wässrige Phase wird dann unter Rühren in ein zweites Rührgefäß gegeben, in dem die Lösung des Wirkstoffes in den Emulgatoren hergestellt wurde.

Wünschenswert wäre eine entscheidende Vereinfachung des Herstellprozesses, in welchem auf einen anorganischen Verdicker verzichtet werden könnte und anstelle der Lösung eines Schichtsilikates in Wasser zur Herstellung der Emulsion nur Wasser zu der Lösung des Wirkstoffes in den Emulgatoren gegeben werden könnte.

Es wurde überraschend gefunden, daß bei Verwendung eines niedrig ethoxylierten (C₁₂-C₁₄)-Fettalkohols mit enger Homologenverteilung außergewöhnlich stabile Emulsionen von Verbindungen der Formel I in Wasser erhalten werden können, so daß auf die Verwendung eines Verdickers verzichtet werden kann.
Dieser niedrig ethoxylierte (C₁₂-C₁₄)-Fettalkohol kann mit den zusätzlichen Coemulgatoren zur Lösung des Wirkstoffes verwandt werden. Nach Lösung des Wirkstoffes wird unter Rühren Wasser zur Herstellung der konzentrierten Emulsion zugegeben.
Die stabilisierende Wirkung des niedrig ethoxylierten Fettalkohols beruht nicht auf einer Viskositäts- Erhöhung der wässrigen Formulierung, sie kommt vielmehr durch Optimierung der Emulsion zustande.

Der Ethoxylierungsgrad des (C₁₂-C₁₄)-Fettalkohols beträgt 1-4 Mol Ethylenoxid (EO) pro Mol (C₁₂-C₁₄)-Alkohol, bevorzugt sind es 1,5 bis 3,0 Mol Ethylenoxid, insbesondere 2,5 Mol Ethylenoxid.

Als (C₁₂-C₁₄)-Fettalkohol kommt insbesondere iso-Tridecanol oder (C₁₂-C₁₄)-Cocosfettalkohol zur Verwendung. Bevorzugt ist ein (C₁₂-C₁₄)-Cocosfettalkohol mit 2,5 Mol Ethylenoxid (EO) mit enger Homologenverteilung (Arlypon® F von Firma Henkel).

Der Mengenanteil des niedrig ethoxylierten (C₁₂-C₁₄)-Fettalkohols beträgt zwischen 1 - 10 Gew.-% der Formulierung, bevorzugt sind es 2 - 5 Gew.-%.
Der niedrig ethoxylierte (C₁₂-C₁₄)-Fettalkohol wird in Kombination mit weiteren Emulgatoren zur Herstellung von konzentrierten wässrigen Emulsionen von Neophanen und Azaneophanen der Formel I eingesetzt.

So können als zweite nichtionische Emulgator-Komponenten Propylenoxid-Ethylenoxid- Blockoxalkylate verwandt werden, wie z. B. Tributylphenol + 10 Mol Propylenoxid, oxethyliert mit 30 Mol Ethylenoxid (Hoe S 2435, Hoe = Firma Hoechst AG), Alfol® 1620 + 15 Mol Propylenoxid, oxethyliert mit 30 Mol Ethylenoxid (Hoe S 2436);
Polypropylenglycol 3000 + 40 Gew.-% Ethylenoxid
(Hoe S 1816-1); Polypropylenglykol 3000 + 60 Gew.-% Ethylenoxid (Hoe S 1816-2) und n-Butanol-Propylenoxid- Ethylenoxid-Blockoxalkylat, das zu 1-3 Gew.-% aus n-Butanol, zu 40 - 50 Gew.-% aus Propylenoxid und zu 50 - 60 Gew.-% aus Ethylenoxid bestehen kann.

Bevorzugt wird ein Blockoxalkylat eingesetzt, das aus 2 Gew.-% n-Butanol, 44 Gew.-% Propylenoxid und zu 54 Gew.-% aus Ethylenoxid (Hoe S 3510, Firma Hoechst AG) besteht.
Der Anteil an Blockoxalkylat in der Formulierung beträgt 0,5 - 10 Gew.-%, bevorzugt 1,0 - 6,5 Gew.-%.
Als anionaktive Emulgatoren können verwandt werden:
Salze der Dodecylbenzolsulfonsäure, Salze der gegebenenfalls chlorierten (C₁₃-C₁₈)- Alkansulfonsäuren, ferner Emulgatoren aus der Gruppe der (C₁₀-C₁₆)-Alkylmono- bis -hexaglykol- ethersulfatsalze und der (C₁₄-C₁₉)-Alkenolsulfatsalze. Insbesondere die Salze der Dodecylbenzolsulfonsäure sind günstig einzusetzen. Der Begriff Salze steht für Alkali-, Erdalkali-oder Ammoniumsalze, bevorzugt für Na- oder Ca-Salze. Insbesondere bevorzugt ist das Ca-Salz der Dodecylbenzolsulfonsäure (Phenylsulfonat-Ca, Firma Hoechst AG). Der Anteil des anionaktiven Emulgators in der fertigen Formulierung beträgt 0,5 bis 7,0 Gew.-%, bevorzugt sind 1,0 bis 4,0 Gew.-%.

Der Mengenanteil des Gemisches aus zwei nichtionischen und einem anionischen Emulgator beträgt 4 bis 15 Gew.-%, insbesondere 5 bis 12 Gew.-%.

Außer den genannten Emulgatoren können die erfindungsgemäßen Formulierungen noch weitere übliche Formulierungshilfsmittel enthalten. So z. B. als Frostschutzmittel:
ein- oder mehrwertige Alkohole, Glykolether oder Harnstoff besonders Glycerin, Isopropanol, Propylenglykolmonomethylether, Di- oder Tripropylenglykolmonomethylether oder Cyclohexanol. Der Anteil dieser Frostschutzmittel liegt zwischen 0,2 und 20 Gew.-%.
Als Konservierungsmittel können den wässrigen Formulierungen folgende Mittel zugesetzt werden: Formaldehyd oder Hexahydrotriazinderivate wie z.B. Mergal® KM 200 von Firma Riedel de Haen oder Cobate C von Firma Rhône Poulenc, Isothiazolinon-Derivate, wie z. B. Mergal® K9N von Firma Riedel de Haen oder Kathon® CG von Firma Rohm u. Haas, 1,2-Benzisothiazolin-2-one wie z. B. Nipacide BIT 20 von Fa. Nipa Laboratorien GmbH oder Mergal® K10 von Fa. Riedel de Haen oder 5-Brom-5-nitro-1,3-dioxan (Bronidox® L von Fa. Henkel). Der Anteil dieser Konservierungsmittel liegt zwischen 0,0005 und 2 %.

Zur Herstellung der hier beschriebenen Formulierungen werden zunächst Wirkstoff und Emulgatoren bei 25 bis 45°C gerührt, bis eine Lösung entstanden ist. Hierfür sind in der Regel 1 bis 2 Stunden erforderlich. Unter Rühren wird dann die berechnete Menge Wasser zu der Wirkstoff/Emulgator-Lösung getropft, anschließend wird noch 2 bis 5 Stunden bei 25 bis 30°C gerührt. Es werden so Emulsionen mit Teilchengrößen von 50 % < 0,36 - 0,44 µm erhalten. Ebenso kann auch umgekehrt vorgegangen werden, indem Wasser vorgelegt und die organische Lösung von Emulgatoren und Wirkstoff unter Rühren zugetropft wird. Es werden dieselben Rührzeiten und Temperaturen angewandt, wobei Emulsionen mit Teilchengrößen von 50 % < 0,34 - 0,40 µm erhalten werden.

Verbindungen der Formel I können so zu wässrigen Emulsionen formuliert werden, die in einem breiten Temperaturbereich lagerstabil und gut gießfähig (geeignete Viskosität) sind. Darüberhinaus besitzen die erfindungsgemäßen wässrigen Emulsionen die genannten umwelt- und anwenderfreundlichen Eigenschaften. Die Gesamtmenge an Emulgatoren kann außerordentlich niedrig gehalten werden, eine Verwendung von Lösemitteln ist nicht erforderlich, so daß die Formulierungen wenig umweltgefährdende Stoffe enthalten.

Die Konzentrationen von Wirkstoffen der Formel I in den beschriebenen Formulierungen können beliebig zwischen 0,1 und 70 % liegen, je nach den Anforderungen des Marktes, bevorzugt jedoch sind Konzentrationen zwischen 5 % und 45 %.

Die Erfindung wird durch die nachfolgenden Herstellungsbeispiele erläutert, wobei diese die Erfindung nicht einschränken:
- Die Bestimmung der Teilchengröße wurde mit einem Malvern Master Sizer MS20R (Firma Malvern) durchgeführt.
- Die Viskosität wurde mit einem Rheomat 115, Fa. Contraves, gemessen.

### Beispiel 1

### Anteil in der fertigen Formulierung

a) 40,00 Gew.-% einer Verbindung der Formel I
   1,52 Gew.-% Dodecylbenzolsulfonsaures Calzium (Phenylsulfonat-Ca, Hoechst AG)
   2,62 Gew.-% n-Butanol-Propylenoxid-Ethylenoxid-Block-oxalkylat (Hoe S 3510)
   3,53 Gew.-% Isotridecanol mit 3 EO (Genapol® X-030, Hoechst AG)
   werden 2 Stunden bei 40°C gerührt, bis eine Lösung entstanden ist.

### Anschließend werden

b) 52,33 Gew.-% Wasser unter Rühren zur Lösung a) getropft.
Nach dem Zutropfen wird noch 3 Stunden bei 25 - 30°C gerührt. Es entsteht eine Emulsion mit einer Teilchengröße von 50 % < 0,36 µm.

### Beispiel 2

### Anteil in der fertigen Formulierung

a) 41,00 Gew.-% einer Verbindung der Formel I
   1,52 Gew.-% Dodecylbenzolsulfonsaures Calzium (Phenylsulfonat-Ca, Hoechst AG)
   2,62 Gew.-% n-Butanol-Propylenoxid-Ethylenoxid-Block-oxalkylat (Hoe S 3510)
   3,53 Gew.-% C₁₂-C₁₄ Cocosfettalkohol mit 2,5 EO (Arlypon® F von Firma Henkel)
   werden 2 Stunden bei 40°C gerührt, bis eine Lösung entstanden ist. Diese organische Phase wird unter
   Rühren zu
b) 51,33 Gew.-% Wasser getropft.
Danach wird noch 3 Stunden bei 25 - 30°C gerührt. Es entsteht eine Emulsion mit einer Tröpfchengröße von
50 % < 0,38 µm.

### Beispiel 3

### Anteil in der fertigen Formulierung

a) 43,00 Gew.-% einer Verbindung der Formel I
   1,32 Gew.-% Dodecylbenzolsulfonsaures Calzium (Phenylsulfonat-Ca, Hoechst AG)
   2,62 Gew.-% n-Butanol-Propylenoxid-Ethylenoxid-Block-oxalkylat (Hoe S 3510)
   4,03 Gew.-% C₁₂-C₁₄ Fettalkohol mit 2 EO (Genapol® X-020, Hoechst AG)
   werden 2 Stunden bei 40°C gerührt, bis eine Lösung entstanden ist.

### Anschließend werden

b) 49,03 Gew.-% Wasser zur Lösung des Wirkstoffes in den Emulgatoren getropft.

Danach wird noch 3 Stunden bei 25 - 30°C gerührt.

Es entsteht eine Emulsion mit einer Teilchengröße von 50 % < 0,41 µm.

### Beispiel 4

### Anteil in der fertigen Formulierung

a) 43,00 Gew.-% einer Verbindung der Formel I
   1,42 Gew.-% Dodecylbenzolsulfonsaures Calzium (Phenylsulfonat-Ca, Hoechst AG)
   1,92 Gew.-% n-Butanol-Propylenoxid-Ethylenoxid-Block-oxylkylat (Hoe S 3510)
   3,03 Gew.-% C₁₂-C₁₄ Cocosfettalkohol mit 2,5 EO (Arlypon® F von Firma Henkel)
   werden 2 Stunden bei 40°C gerührt, bis eine Lösung entstanden ist.

### Anschließend werden

b) 50,63 Gew.-% Wasser zur organischen Lösung getropft.

Danach wird noch 3 Stunden bei 25 - 30°C gerührt.

Es entsteht eine Emulsion mit einer Teilchengröße von
50 % < 0,37 µm.

### Beispiel 5

### Anteil in der fertigen Formulierung

a) 20,6 Gew.-% einer Verbindung der Formel I
   2,2 Gew.-% Dodecylbenzolsulfonsaures Calzium (Phenylsulfonat-Ca, Hoechst AG)
   5,8 Gew.-% Polypropylenglykol 3000 + 40 Gew.-% Ethylenoxid (Hoe S 1816-1)
   3,0 Gew.-% C₁₂-C₁₄ Cocosfettalkohol mit 2,5 EO (Arlypon® F von Firma Henkel)
b) 68,4 Gew.-% Wasser
Die Herstellung wird wie in Beispiel 1 beschrieben durchgeführt. Es entsteht eine Emulsion mit einer Teilchengröße von 50 % < 0,36 µm.

### Beispiel 6

### Anteil in der fertigen Formulierung

a) 20,4 Gew.-% einer Verbindung der Formel I
   2,2 Gew.-% Dodecylbenzolsulfonsaures Calzium (Phenylsulfonat-Ca, Hoechst AG)
   5,7 Gew.-% n-Butanol-Propylenoxid-Ethylenoxid-Block-oxalkylat (Hoe S 3510)
   3,0 Gew.-% C₁₂-C₁₄ Cocosfettalkohol mit 2,5 EO (Arlypon® F von Firma Henkel)
b) 68,7 Gew.-% Wasser

Die Herstellung wird wie in Beispiel 2 beschrieben durchgeführt. Es entsteht eine Emulsion mit einer Teilchengröße von 50 % < 0,34 µm.

### Beispiel 7

### Anteil in der fertigen Formulierung

a) 21,3 Gew.-% einer Verbindung der Formel I
   2,2 Gew.-% Dodecylbenzolsulfonsaures Calzium (Phenylsulfonat-Ca, Hoechst AG)
   5,8 Gew.-% n-Butanol-Propylenoxid-Ethylenoxid-Block-oxylkylat (Hoe S 3510)
   3,0 Gew.-% C₁₂-C₁₄ Cocosfettalkohol mit 2,5 EO (Arlypon® F von Firma Henkel)
b) 67,7 Gew.-% Wasser
Die Herstellung wird wie in Beispiel 1 beschrieben durchgeführt. Es entsteht eine Emulsion mit einer Teilchengröße von 50 % < 0,36 µm.

Die Viskosität der wässrigen Emulsionen nach den Beispielen 6 und 7 liegt bei niedriger Scherbeanspruchung von 16,8 Sek.⁻¹ bei 19 - 23 mPa·s und bei hoher Scherbeanspruchung von 144 Sek⁻¹ bei 15 - 18 mPa·s.

### Beispiel 8

### Anteil in der fertigen Formulierung

a) 7,3 Gew.-% einer Verbindung der Formel I
   1,3 Gew.-% Dodecylbenzolsulfonsaures Calzium (Phenylsulfonat-Ca, Hoechst AG)
   3,5 Gew.-% n-Butanol-Propylenoxid-Ethylenoxid-Block-oxylkylat (Hoe S 3510)
   1,8 Gew.-% C₁₂-C₁₄ Cocosfettalkohol mit 2,5 EO (Arlypon® F von Firma Henkel)
b) 86,1 Gew.-% Wasser
Die Herstellung wird wie in Beispiel 1 beschrieben durchgeführt. Es entsteht eine transparente Mikroemulsion.

Die konzentrierten wässrigen Emulsionen der Herstellungs-beispiele 1 - 8 sind nach 3-monatiger Lagerung bei 20°C, 40°C und 50°C, nach 14-tägiger Lagerung bei 54°C und nach 14-tägiger Lagerung bei 0°C homogen, es wird keine Phasentrennung oder Abscheidung von Festkörpern beobachtet.

Vor und nach Lagerung entsprechen die konzentrierten wässrigen Emulsionen der Beispiele 1 bis 8 bei Verdünnung auf Anwendungskonzentration den internationalen Prüfbestimmungen; d. h. eine auf 5 % mit Wasser von 30°C und 342 ppm Härte (CIPAC-Standard-Wasser D (CIPAC-Handbook, Vol. 1, S. 878, Collaborative International Pesticides Analytical Council Ltd. (1970) s.a. Specifications for Pesticides used in public Health, World Health Organisation, Genf (1973)) verdünnte Emulsion hat nach 6 Stunden Standzeit keine cremigen oder öligen Abscheidungen.

## Patentansprüche

1. Konzentrierte, wässrige Emulsion von Verbindungen der allgemeinen Formel I 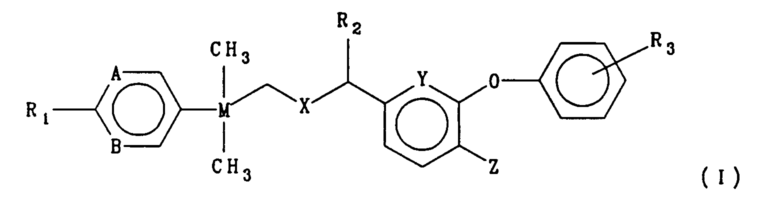 worin
A, B = unabhängig voneinander CH, CR₄, N,
X = CH₂, O, S,
Y = CH, N,
Z = H, F,
R₁, R₄ = unabhängig voneinander H, Halogen, (C₁-C₃)-Alkyl, (C₁-C₃)-Halogenalkyl, (C₁-C₃)-Alkoxy, (C₁-C₃)-Halogenalkoxy, (C₁-C₄)-Alkylthio, (C₁-C₄)-Halogenalkylthio oder R₁ und R₄ zusammen = -CH₂-O-CH₂-;
R₂ = H, (C₁-C₃)-Alkyl, Ethinyl, Vinyl, Halogen, Cyano,
R₃ = H, Halogen, (C₁-C₄)-Alkyl, (C₁-C₃)-Alkoxy und
M = C oder Si bedeuten, dadurch gekennzeichnet, daß diese niedrig ethoxylierte (C₁₂-C₁₄)-Fettalkohole mit enger Homologenverteilung enthalten in Kombination mit einem anionaktiven Emulgator und einem nichtionischen Propylenoxid-Ethylenoxid- Blockoxyalkylat.

2. Konzentrierte, wässrige Emulsionen gemäß Anspruch 1, dadurch gekennzeichnet, daß in Formel I
A, B = CH oder N, X = CH₂, R₁ = (C₁-C₃)-Alkoxy, R₂ = H,
R₃ = H oder F und M = Si bedeuten.

3. Konzentrierte, wässrige Emulsionen gemäß Anspruch 1 oder 2, dadurch gekennzeichnet, daß in Formel I M = Si, R₁ = Ethoxy, A, B = CH, X = CH₂, R₂ = H, Y = CH, Z = F und R₃ = H bedeuten.

4. Konzentrierte, Wässrige Emulsionen gemäß einem oder mehreren der Ansprüche 1 bis 3, dadurch gekennzeichnet, daß diese gegebenenfalls bei Verdünnung 0,1 - 70 Gew.-% einer Verbindung der Formel I, 0,5 - 7,0 Gew.-% anionaktiver Emulgator, 1 - 10 Gew.-% niedrig ethoxylierter C₁₂-C₁₄-Fettalkohol und 0,5 - 10 Gew.-% Blockoxalkylat enthalten.

5. Konzentrierte, wässrige Emulsionen gemäß einem oder mehreren der Ansprüche 1 bis 4, dadurch gekennzeichnet, daß diese gegebenenfalls bei Verdünnung 0,1 - 45 Gew.-% einer Verbindung der Formel I, 1,0 - 4,0 Gew.-% anionaktiver Emulgator, 2 - 5 Gew.-% niedrig ethoxylierter C₁₂-C₁₄-Fettalkohol und 1,0 - 6,5 Gew.-% Blockoxalkylat enthalten.

6. Konzentrierte, wässrige Emulsionen gemäß einem oder mehreren der Ansprüche 1 bis 5, dadurch gekennzeichnet, daß als anionaktiver Emulgator ein Alkali- oder Erdalkalisalz der Dodecylbenzolsulfonsäure, als nicht ionogener Emulgator C₁₂-C₁₄-Cocosfettalkohol mit 2,5 Mol Ethylenoxid mit enger Homologenverteilung und/oder Propylenoxid-Ethylenoxid Blockoxalkylat verwendet werden.

7. Konzentrierte, wässrige Emulsionen gemäß einem oder mehreren der Ansprüche 1 bis 6, dadurch gekennzeichnet, daß ein Blockoxalkylat bestehend aus 2 Gew.-% n-Butanol, 44 Gew.-% Propylenoxid und 54 Gew.-% Ethylenoxid verwendet wird.

8. Konzentrierte, wässrige Emulsionen gemäß einem oder mehreren der Ansprüche 1 bis 6, dadurch gekennzeichnet, daß der Mengenanteil des Gemisches aus zwei nichtionischen und einem anionischen Emulgator zwischen 4 und 15 Gew.-% enthält.

9. Konzentrierte, wässrige Emulsionen gemäß Anspruch 8, dadurch gekennzeichnet, daß der Mengenanteil des Gemisches aus zwei nichtionischen und einem anionischen Emulgator zwischen 5 und 12 Gew.-% enthält.

10. Verfahren zur Bekämpfung von Schadinsekten oder Akariden, dadurch gekennzeichnet, daß man auf diese oder die von diesen befallenen Pflanzen, Flächen oder Substrate oder das von ihnen befallene Saatgut eine wirksame Menge einer konzentrierten, wässrigen, gegebenenfalls verdünnten Emulsion gemäß einem oder mehreren der Ansprüche 1 bis 9 appliziert.

11. Verwendung einer konzentrierten, wässrigen, gegebenenfalls verdünnten Emulsion gemäß einem oder mehreren der Ansprüche 1 bis 9 zur Bekämpfung von Schadinsekten oder Akariden.

12. Verfahren zur Herstellung von wässrigen Emulsionen gemäß einem oder mehreren der Ansprüche 1 bis 9, dadurch gekennzeichnet, daß Wirkstoffe der Formel I und die beschriebenen Emulgatoren so lange gerührt werden bis eine Lösung entsteht und anschließend Wasser zugegeben wird, wobei auch umgekehrt verfahren werden kann.

## Claims

1. A concentrated, aqueous emulsion of compounds of the formula I 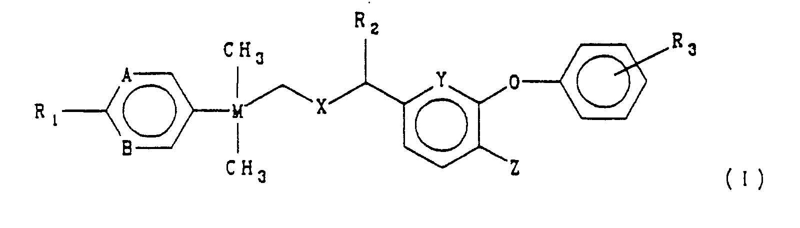 in which
A and B independently of one another are CH, CR₄ or N,
X is CH₂, O or S,
Y is CH or N,
Z is H or F,
R₁ and R₄ independently of one another are H, halogen, (C₁-C₃)-alkyl, (C₁-C₃)-haloalkyl, (C₁-C₃)-alkoxy, (C₁-C₃)-haloalkoxy, (C₁-C₄)-alkylthio, (C₁-C₄)-haloalkylthio or R₁ and R₄ together are -CH₂-O-CH₂-;
R₂ is H, (C₁-C₃)-alkyl, ethynyl, vinyl, halogen or cyano,
R₃ is H, halogen, (C₁-C₄)-alkyl or (C₁-C₃)-alkoxy and
M is C or Si,
which comprise (C₁₂-C₁₄)-fatty alcohols with a narrow distribution of homologs and a low degree of ethoxylation, in combination with an anionic emulsifier and a non-ionic propylene oxide / ethylene oxide block alkoxylate.

2. A concentrated, aqueous emulsion as claimed in claim 1, wherein, in formula I, A and B are CH or N, X is CH₂, R₁ is (C₁-C₃)-alkoxy, R₂ is H, R₃ is H or F and M is Si.

3. A concentrated, aqueous emulsion as claimed in claim 1 or 2, wherein, in formula I, M is Si, R₁ is ethoxy, A and B are CH, X is CH₂, R₂ is H, Y is CH, Z is F and R₃ is H.

4. A concentrated, aqueous emulsion as claimed in one or more of claims 1 to 3, which optionally on dilution comprises 0.1 - 70 % by weight of a compound of the formula I, 0.5 - 7.0 % by weight of anionic emulsifier, 1 - 10 % by weight of C₁₂-C₁₄-fatty alcohol with a low degree of ethoxylation and 0.5 - 10 % by weight of block alkoxylate.

5. A concentrated, aqueous emulsion as claimed in one or more of claims 1 to 4, which optionally on dilution comprises 0.1 - 45 % by weight of a compound of the formula I, 1.0 - 4.0 % by weight of anionic emulsifier, 2 - 5 % by weight of C₁₂-C₁₄-fatty alcohol with a low degree of ethoxylation and 1.0 - 6.5 % by weight of block alkoxylate.

6. A concentrated, aqueous emulsion as claimed in one or more of claims 1 to 5, which comprises an alkali or alkaline earth metal salt of dodecylbenzenesulfonic acid as anionic emulsifier and, as non-ionic emulsifier, C₁₂-C₁₄-coconut fatty alcohol with 2.5 mol of ethylene oxide with a narrow distribution of homologs and/or propylene oxide / ethylene oxide block oxalkylate.

7. A concentrated, aqueous emulsion as claimed in one or more of claims 1 to 6, wherein a block alkoxylate composed of 2 % by weight of n-butanol, 44 % by weight of propylene oxide and 54 % by weight of ethylene oxide is used.

8. A concentrated, aqueous emulsion as claimed in one or more of claims 1 to 6, which comprises between 4 to 15 % by weight of the mixture of two non-ionic and one anionic emulsifier.

9. A concentrated, aqueous emulsion as claimed in claim 8, which comprises between 5 to 12 % by weight of the mixture of two non-ionic and one anionic emulsifier.

10. A method of controlling noxious insects or acarids, which comprises applying an effective amount of a concentrated, aqueous, optionally diluted emulsion as claimed in one or more of claims 1 to 9 to these noxious insects or acarids or to the plants, areas, substrates or seed infested with them.

11. The use of a concentrated, aqueous, optionally diluted emulsion as claimed in one or more of claims 1 to 9 for controlling noxious insects or acarids.

12. A process for the preparation of aqueous emulsions as claimed in one or more of claims 1 to 9, which comprises stirring the active substances of the formula I and the above-described emulsifiers until a solution has formed and subsequently adding water, the reverse procedure also being possible.

## Revendications

1. Emulsions aqueuses concentrées de composés de formule I 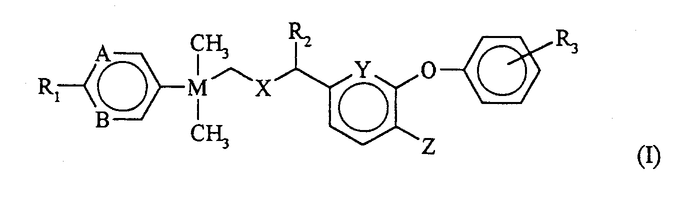 dans laquelle
A, B représentent indépendamment l'un de l'autre CH, CR₄, N,
X représente CH₂ O, S,
Y représente CH, N,
Z représente H, F,
R₁, R₄ représentent indépendamment l'un de l'autre H, un halogène, un alkyle en C₁-C₃, un halogénoalkyle en C₁-C₃, un alcoxy en C₁-C₃, un halogénoalcoxy en C₁-C₃, un alkylthio- en C₁-C₄, un halogénoalkylthio en C₁-C₄, ou bien R₁ et R₄ forment ensemble -CH₂-O-CH₂-;
R₂ représente H, un alkyle en C₁-C₃, un éthynyle, un vinyle, un halogène, un cyano,
R₃ représente H, un halogène, un alkyle en C₁-C₄, un alcoxy en C₁-C₃, et
M représente C ou Si,
caractérisées en ce qu'elles contiennent des alcools gras en C₁₂-C₁₄ faiblement éthoxylés avec une distribution étroite d'homologues, en combinaison avec un émulsionnant anionique et un oxyalkylate à blocs oxyde de propylène-oxyde d'éthylène non ionique.

2. Emulsions aqueuses concentrées selon la revendication 1, caractérisées en ce que, dans la formule I, A et B représentent CH ou N, X est CH₂, R₁ est un alcoxy en C₁-C₃, R₂ est H, R₃ est H ou F et M est Si.

3. Emulsions aqueuses concentrées selon la revendication 1 ou 2, caractérisées en ce que, dans la formule I, M est Si, R₁ est un éthoxy, A, B sont CH, X est CH₂, R₂ est H, Y est CH, Z est F et R³ est H.

4. Emulsions aqueuses concentrées selon l'une ou plusieurs des revendications 1 à 3, caractérisées en ce qu'elles contiennent, éventuellement après dilution, 0,1 à 70 % en masse d'un composé de formule I, 0,5 à 7,0 % en masse d'un émulsionnant anionique, 1 à 10 % en masse d'un alcool gras en C₁₂-C₁₄ faiblement éthoxylé et 0,5 à 10 % en masse d'un oxyalkylate à blocs.

5. Emulsions aqueuses concentrées selon l'une ou plusieurs des revendications 1 à 4, caractérisées en ce qu'elles contiennent, éventuellement après dilution, 0,1 à 45 % en masse d'un composé de formule I, 1,0 à 4,0 % en masse d'un émulsionnant anionique, 2 à 5 % en masse d'un alcool gras en C₁₂-C₁₄ faiblement éthoxylé et 1,0 à 6,5 % en masse d'un oxyalkylate à blocs.

6. Emulsions aqueuses concentrées selon l'une ou plusieurs des revendications 1 à 5, caractérisées en ce que l'on utilise comme émulsionnant anionique un sel de métal alcalin ou de métal alcalino-terreux de l'acide dodécylbenzènesulfonique, comme émulsionnant non ionique un alcool gras de coco en C₁₂-C₁₄ avec 2,5 moles d'oxyde d'èthylène à distribution d'homologues étroite et/ou un oxyalkylate à blocs oxyde de propylène - oxyde d'éthylène.

7. Emulsions aqueuses concentrées selon l'une ou plusieurs des revendications 1 à 6, caractérisées en ce que l'on utilise un oxyalkylate à blocs constitué de 2 % en masse de n-butanol, de 44 % en masse d'oxyde de propylène et de 54 % en masse d'oxyde d'éthylène.

8. Emulsions aqueuses concentrées selon l'une ou plusieurs des revendications 1 à 6, caractérisées en ce que la proportion du mélange des deux émulsionnants non ioniques et de l'émulsionnant anionique est comprise entre 4 et 15 % en masse.

9. Emulsions aqueuses concentrées selon la revendication 8, caractérisées en ce que la proportion du mélange des deux émulsionnants non ioniques et de l'émulsionnant anionique est comprise entre 5 et 12 % en masse.

10. Procédé de lutte contre les insectes nuisibles ou les acariens, caractérisé en ce qu'on leur applique ou on applique sur les plantes, les surfaces ou les substrats qu'ils infestent ou sur les semences qu'ils infestent une quantité efficace d'une émulsion aqueuse concentrée, éventuellement diluée, selon l'une ou plusieurs des revendications 1 à 9.

11. Utilisation d'une émulsion aqueuse concentrée, éventuellement diluée, selon l'une ou plusieurs des revendications 1 à 9 pour la lutte contre les insectes nuisibles ou les acariens.

12. Procédé de préparation d'émulsions aqueuses selon l'une ou plusieurs des revendications 1 à 9, caractérisé en ce que l'on agite les produits actifs de formule I et les émulsionnants décrits jusqu'à ce qu'il se forme une solution, puis l'on ajoute de l'eau, ces opérations pouvant aussi s'effectuer dans l'ordre inverse.
